# EUROPEAN PATENT SPECIFICATION

(11) **EP 3 434 392 B1**
(45) Date of publication and mention of the grant of the patent: **11.09.2019**
(21) Application number: 17182710.8
(22) Date of filing: 24.07.2017
(51) Int. Cl.: B22F 3/105, B33Y 50/02

(54) **THREE-DIMENSIONAL SHAPING METHOD**
VERFAHREN ZUR DREIDIMENSIONALEN FORMUNG
PROCÉDÉ DE MISE EN FORME TRIDIMENSIONNELLE

(43) Date of publication of application: 30.01.2019
(73) Proprietor: Matsuura Machinery Corporation, Fukui City, Fukui (JP)
(72) Inventor: AMAYA, Kouichi, Fukui City, Fukui (JP); ISHIMOTO, Kousuke, Fukui City, Fukui (JP); YAMADA, Takeshi, Fukui City, Fukui (JP)
(74) Representative: Lambacher, Michael

(56) References cited:
- JP-A- 2017 159 534
- US-A1- 2009 152 771
- JEAN-PIERRE KRUTH ET AL: "On-line monitoring and process control in selective laser melting and laser cutting", PROCEEDINGS OF THE 5TH LANE CONFERENCE, LASER ASSISTED NET SHAPE ENGINEERING, vol. 1, 1 September 2007 (2007-09-01), page 23, XP055441994, ISBN: 978-3-87525-261-3

## Description

### [Technical Field]

The present invention relates to a method for producing a shaped body with a three-dimensional form, by lamination in which formation of a powder layer and sintering of the powder layer by a laser beam or electron beam are repeated.

### [Background Art]

In the aforementioned three-dimensional shaping method, it is currently impossible to completely prevent sintering defects, due to the following reasons:
A. A problem with the laser beam or electron beam control system may result in an excess or insufficiency of the supplied beam, forming a non-flat sintering surface with a generally regular uneven condition, compared to when each beam is supplied normally,
B. Due to formation of the uneven condition of above A or infiltration of chips during formation of the powder layer supplied by the powder supply apparatus, squeegee movement is hampered and it becomes difficult to achieve a uniform flat surface, or melting with the previously sintered layer may be incomplete, causing abnormalities in the powder layer surface that result in a non-flat powder layer surface with an irregular uneven condition.

However, since in a three-dimensional shaping method, the laminating and sintering steps are repeated in a sealed apparatus, it is unavoidable that such sintering defects as mentioned in above A and B will be overlooked and only noticed after completion of all of the laminating steps and all of the sintering steps that have been repeated.

Detection of deterioration or defects generated in structures by irradiation and scattering of light is already publicly known, as disclosed in Patent Documents 1, 2 and 3, for example.

In addition, detection of the positions of cracks in structures such as ceramic bodies by the scattering of light is also publicly known, as disclosed in Patent Documents 4 and 5, for example.

Further, US 2009/0152771 A1 describes a method of manufacturing three-dimensional objects, wherein locally emitted IR-radiation from an applied powder layer is detected to obtain an IR-radiation image. Based on the IR-radiation image defects and/or geometrical irregularities of the applied powder layer are determined.

However, the prior arts neither disclose nor suggest the appropriate use of technology relating to light reflection for three-dimensional shaping methods.

### [Prior Art Documents]

### [Patent Documents]

Patent Document 1: Japanese Published Unexamined Patent Application No. 2008-241658
Patent Document 2: Japanese Published Unexamined Patent Application No. 2010-243375
Patent Document 3: Japanese Published Unexamined Patent Application No. 2013-083493
Patent Document 4: Japanese Published Unexamined Patent Application No. 2003-247943
Patent Document 5: Japanese Published Unexamined Patent Application No. 2004-093300

### [Summary of Invention]

### [Technical Problem]

In light of the background art described above, the present invention provides a three-dimensional shaping method that can prevent generation of defective three-dimensional shaped products due to inclusion of sintering defect regions, by rapidly detecting sintering defects in the powder layer forming step and sintering step.

### [Solution to Problem]

In order to solve the aforementioned problems, the present invention has the following basic configurations.
(1) A three-dimensional shaping method that includes lamination comprising alternatively repeating a powder layer forming step and a sintering step in which the powder layer is sintered by irradiation of a moving laser beam or electron beam, wherein the following process is adopted during the sintering step.
   a. Measuring the reflection intensity of the laser beam or electron beam irradiated during each sintering step, or irradiation of light other than the laser beam on the whole sintering region and the reflection intensity of that light, in each sintering step,
   b. commanding to continue sintering in the next time unit or the next powder layer forming step is given, when, in a time unit within the time necessary for each sintering step, it has been detected that the reflection intensity of the process a is within a standard range for reflection intensity in which no sintering defects are produced,
   c. commanding to cancel sintering in the next time unit or the next powder layer forming step is given under a judging that a sintering defect has occurred, when, in a time unit within the time necessary for each sintering step, it has been detected that the reflection intensity of the process a has deviated from the standard range for reflection intensity in which no sintering defects are produced,
   d. taking spectral images for the laser beam or electron beam, or reflected light other than the laser beam that has been reflected from the sintering region where the sintering defect has occurred causing commanding in the process c, and from the sintering region within the subsequent time unit, based on the intensity corresponding to each wavelength according to a spectral function,
   e. judging that the cause of the sintering defect resulted in commanding in the process c is a problem with the control system related to the laser beam or electron beam, when each spectral image in the process d is unchanged or changes only gradually, and
   judging that the cause of the sintering defect is a problem with the powder layer-formed surface, when each spectral image in the process d changes rapidly.
(2) A three-dimensional shaping method that includes lamination comprising alternatively repeating a powder layer forming step and a sintering step in which the powder layer is sintered by irradiation of a moving laser beam or electron beam, wherein the following process is adopted during the sintering step.
   a. Measuring the reflection intensity of the laser beam or electron beam irradiated during each sintering step, or irradiation of light other than the laser beam on the whole sintering region and the reflection intensity of that light, in each sintering step,
   b. commanding to continue sintering in the next time unit or the next powder layer forming step is given, when, in a time unit within the time necessary for each sintering step, it has been detected that the reflection intensity of the process a is within a standard range for reflection intensity in which no sintering defects are produced,
   c. commanding to cancel sintering in the next time unit or the next powder layer forming step is given under a judging that a sintering defect has occurred, when, in a time unit within the time necessary for each sintering step, it has been detected that the reflection intensity of the process a has deviated from the standard range for reflection intensity in which no sintering defects are produced,
   f. recording the reflection intensities at the sintering region where the sintering defect that resulted in commanding in the process c, and at the sintering region within the subsequent time unit,
   g. judging that the cause of the sintering defect resulted in commanding in the process c is a problem with the control system related to the laser beam or electron beam, when each reflection intensity in the process f is unchanged or changes only gradually, and
judging that the cause of the sintering defect is a problem with the powder layer-formed surface, when each reflection intensity in the process f changes rapidly.

### [Advantageous Effects of Invention]

With the basic configurations (1) and (2), the sintering step in the next time unit, or the next powder layer forming step, can be canceled by detection of a sintering defect with commanding in the process c, making it possible to prevent unnecessary steps of further lamination and sintering after a sintering defect has occurred, and to thus detect sintering defect regions, and consequently avoid generation of defective three-dimensional shaped products.

Moreover, when the cause of a sintering defect has been identified and corrected, and the entire sintering region in which the sintering defect has occurred, or that entire region and the already laminated sintering regions, are removed by melting or softening, or all of the entire sintering regions are removed with a cutting tool, and a new laminating step and sintering step are repeated, it is possible to efficiently carry out production of a three-dimensional shaped product despite generation of the sintering defects.

### [Brief Description of Drawings]

Fig. 1 is a pair of schematic diagrams showing an apparatus for carrying out the three-dimensional shaping method of the invention, (a) shows a case in which the reflection intensity of the laser beam or the electron beam used for sintering in each sintering step is measured according to basic configurations (1) and (2), and (b) shows a case in which, after irradiation of the whole sintering region in each sintering step with light other than a laser beam, the reflection intensity of that light is measured, according to basic configurations (1) and (2).
Fig. 2 is a flow chart representing the processes a, b and c of basic configurations (1) and (2).
Fig. 3 is a pair of spectral images showing the principle for elucidating the cause of sintering problems by spectrum analysis of reflected light, (a) shows the difference based on change in the spectral image due to a problem with control according to A under Background Art, and (b) shows the difference based on change in the spectral image due to a problem with the lamination surface according to B under Background Art.
   Note that the dotted lines represent the spectral images at levels where a sintering defect has occurred that has resulted in commanding in the process c, while the solid lines represent the subsequent spectral images.
Fig. 4 is a flow chart relating to distinguishing between causes based on differences in the state of change as shown in Fig. 3.
Fig. 5 is a pair of graphs showing comparisons between transition of time units of reflection intensity in the case of a sintering defect resulting in commanding of the process c, and transition of time units of normal reflection intensity, (a) shows the state of change of reflection intensity having a problem with the control system according to A under Background Art, and (b) shows the state of change of reflection intensity having a problem with the lamination surface according to B under Background Art.
   Note that the dotted lines represent the reflection intensities at levels where a sintering defect has occurred that has resulted in commanding in the process c, while the solid lines represent the subsequent reflection intensities.
Fig. 6 is a flow chart relating to distinguishing between causes based on differences in the state of change as shown in Fig. 5.

### [Description of Embodiments]

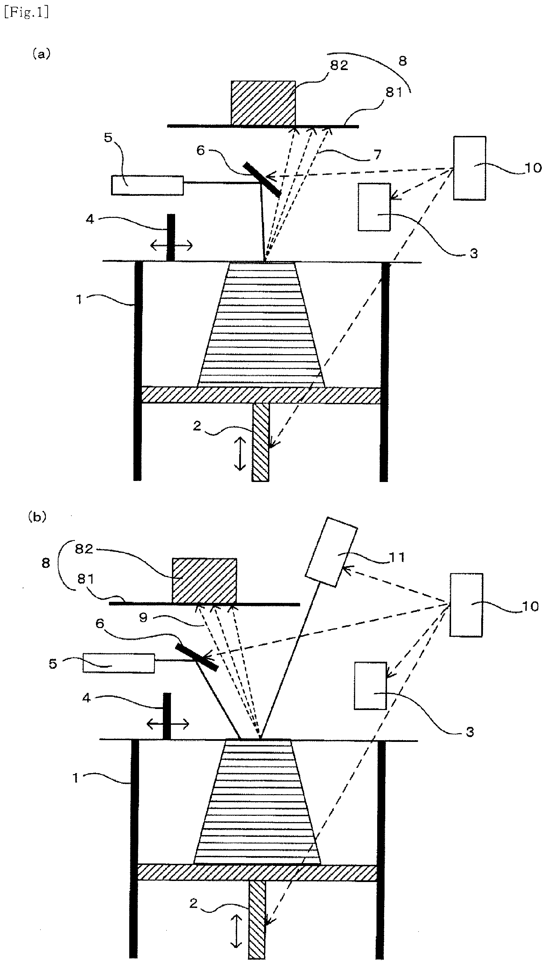

According to basic configurations (1) and (2), as shown in Fig. 1(a), the construction is the same as the prior art in requiring a table 2 that supports powder to be laminated and a sintered product from the powder in a container (vessel) 1, a powder supply device 3 for the container 1, a squeegee 4 used to flatten the provided powder, a laser beam or electron beam supply source 5 and a scanner device 6 capable of moving the beams, and a controller 10, but it also comprises a reflection intensity measuring apparatus 8 for the irradiated laser beam or electron beam, or as shown in Fig. 1(b), it comprises the same constituent elements as the prior art but also comprises a reflection intensity measuring apparatus not for reflection intensity of the irradiated laser beam or electron beam but rather for light rays irradiated onto the entire irradiation region from an irradiating light source 11 (note that, in Fig. 1(b), the reflected laser beam or electron beam 7 is not shown).

The light source other than that for the laser beam may be not only visible light rays but also light rays other than visible light rays, such as ultraviolet rays, infrared rays or far-infrared rays.

Measurement of the reflection intensity in the process a of basic configurations (1) and (2) assumes that, in each laminating step, the reflection intensity of the reflective beam 7 or reflected light 9 can be measured over the entire sintering region, while the sintering region changes in order.

Based on this assumption, when reflection intensity of light other than a laser beam is to be measured, it is essential for the light irradiation to be performed over the entire sintering region.

When the reflection intensity of the process a is of the reflective beam 7 of a laser beam or reflected light 9, the measurement is made with a photoelectric conversion device, and when it is the reflective beam 7 of an electron beam, the measurement is made by electromagnetic induction.

The intensity for measurement by photoelectric conversion may use either luminosity or illuminance as standard.

For measurement by electromagnetic induction, on the other hand, a voltage value or current value based on electromagnetic induction is used as standard.

In order to evaluate the reflection intensity in the process b and c of basic configurations (1) and (2), the time unit is set to be within each sintering step, the reason being for more efficient evaluation, since it is very cumbersome and also meaningless to perform evaluation for each measurement.

The time unit also includes cases where it is the time of each sintering step, but it may also be selected as a time that is 1/10 to 1/2 of that time.

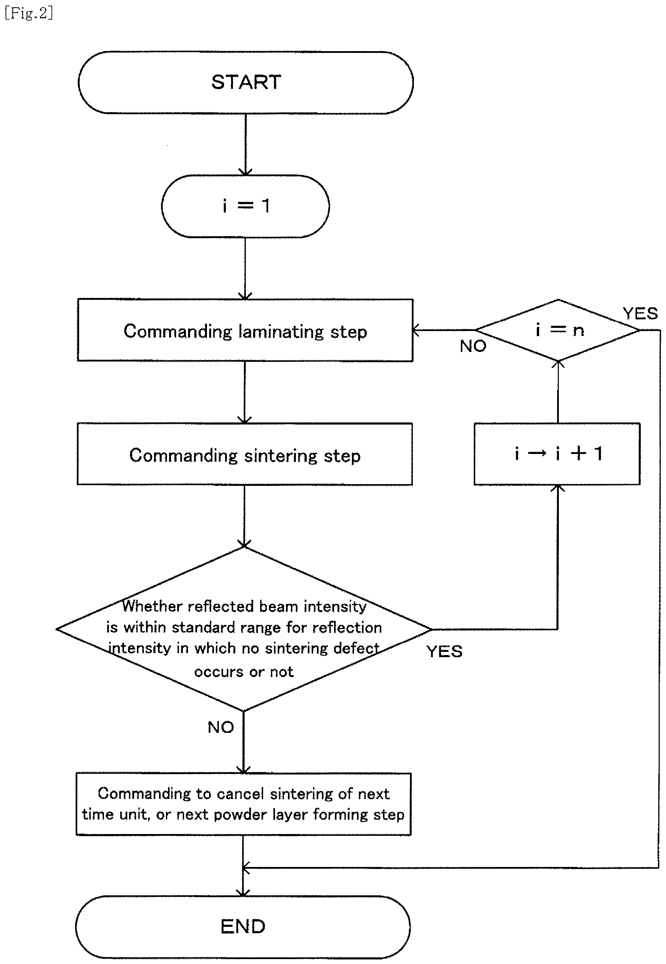

The processes of the processes a, b and c of basic configurations (1) and (2) are shown in the flow chart of Fig. 2, prescribing that when the reflection intensity is such that no sintering defect has occurred and is within the reflection intensity range previously set as the standard, then commanding is given to continue sintering for the next time unit, or the next powder layer forming step, as described in the process b, but when the reflection intensity is such that a sintering defect has occurred and is outside of the reflection intensity range previously set as the standard, i.e. it is either larger than or smaller than the standard range, then sintering for the next time unit, or the next powder layer forming step, is canceled.

The standard range in which it is assumed that no sintering defect has occurred is set beforehand, by data in numerical ranges serving as the standard of luminosity or illuminance (for the reflective beam 7 of a laser beam or reflected light 9) and the voltage value or current value (for the reflective beam 7 of an electron beam) when it has been confirmed that no sintering defects are produced, for each sintering step.

The data for the standard numerical ranges are set in the following manner.

In a three-dimensional shaping method, an appropriate laser beam or electron beam intensity range is defined according to the type of object to be shaped.

Thus, the standard for avoiding an uneven condition caused by an abnormal beam supply according to A under Background Art can be pre-established by successively increasing and decreasing the normal supplied amount of a laser beam or electron beam from the normal state, for the prescribed time unit and at the prescribed measuring position for each type of object to be shaped, with the supply carried out so as to reach the limits for the appropriate uneven condition, measuring the luminosity or illuminance and the voltage value or current value at the limit levels, and determining the maximum just before the supply amount reaches an excess level and the minimum just before it reaches an insufficient level.

On the other hand, most types of three-dimensional shaping objects are common with each other according to having a normal, i.e. flat powder surface.

According to the consideration for such a common state, the standard for avoiding an abnormal uneven condition according to B under Background Art can be pre-established, through separate experiments in which by defining a condition of poor movement of the squeegee 4 that can interfere with obtaining a flat surface, which is caused by infiltration of chips, or an incomplete molten state due to insufficient sintering, during the prescribed time unit or at the prescribed measuring position, the degree of irregularity and the degree of incompleteness are gradually reduced, by confirming the border levels for a normal flat condition and an abnormal uneven condition, measuring the luminosity or illuminance and the voltage value or current value at the confirmed levels, and determining the minimum just before an irregular condition is reached.

The basis for selecting cancellation, as in the process c when the reflection intensity as measured according to the process a deviates from the aforementioned standard range, is as follows.

When a problem relating to control of the laser beam or electron beam according to A above has occurred, if the beams exceed the proper amount that does not generate sintering defects, then the reflection intensity also exceeds the proper range, or if the beams are insufficient, then the reflection intensity must be less than the numerical range.

In either case, whether the beams exceed the proper numerical range or are insufficient, this means that so long as an essentially regular uneven condition is formed on the sintering surface compared to normal sintering, if the reflection intensity deviates from the prescribed numerical range, then it was appropriate to select the cancellation in the process c, in response to the generation of a sintering defect.

On the other hand, in the case of a problem with the powder layer surface according to B above, the irradiated laser beam or electron beam undergoes diffuse reflection on the problematic surface and the reflection intensity measured with the reflection intensity measuring apparatus 8 shown in Fig. 1(a) and (b) changes to a smaller value compared to a normal surface in which no sintering defect has been produced, and it is concluded that the selection in the process c was appropriate.

Moreover, a sintering defect that resulted in commanding in the process c is due to causes A and B in most cases.

Consequently, it is highly appropriate to issue commanding cancellation for the process c based on the standard range for reflection intensity when no sintering defects occur, and the commanding prevention for the meaningless and futile steps of further repeated lamination and sintering, so that it becomes possible to avoid production of a three-dimensional shaped product with defects.

The standard range for reflection intensity in which no sintering defects occur will differ depending on the material of the object to be shaped, the radiation intensity of each beam and the performance of the measuring apparatus that measures the reflective beam 7 or reflected light 9, and it is impossible to specify the numerical range for the standard range in a general manner.

It is therefore indispensable to consider each of the factors and to specify the numerical range based on accumulated experience.

When a sintering defect that results in commanding of the process c has occurred, the cause thereof is usually diagnosed.

In order to diagnose the cause of the sintering defect, the following process may be adopted according to basic configuration (1) .
d. Taking spectral images for the laser beam or electron beam, or reflected light other than the laser beam that has been reflected from the sintering region where the sintering defect has occurred causing commanding in the process c, and from the sintering region within the subsequent time unit, based on the intensity corresponding to each wavelength according to a spectral function,
e. judging that the cause of the sintering defect resulted in commanding in the process c is a problem with the control system related to the laser beam or electron beam, when each spectral image in the process d is unchanged or changes only gradually, and
judging that the cause of the sintering defect is a problem with the powder layer-formed surface, when each spectral image in the process d changes rapidly.

The judging process e based on the spectral image of the process d derives from the empirical rule that a change that has occurred in the state of reflection of the laser beam or light that results in a change in reflection intensity must necessarily lead to a change in the spectral image based on the reflection intensity.

The judging process e is based on the following.

When A is a sintering defect caused by a problem relating to the control system, the abnormal state of irradiation of the laser beam or electron beam continues and the uneven shape produced by the irradiation is essentially regular, and therefore the condition of the reflected laser beam 7 and reflected light 9 will exhibit either no change (also including no change in approximate terms, or essentially no change), or only a small change, with a different sintering region.

Consequently, the spectral image for the subsequent sintering region will exhibit either no change or only a small change compared to the spectral image at the region of the sintering defect that resulted in commanding process c, as according to the process d.

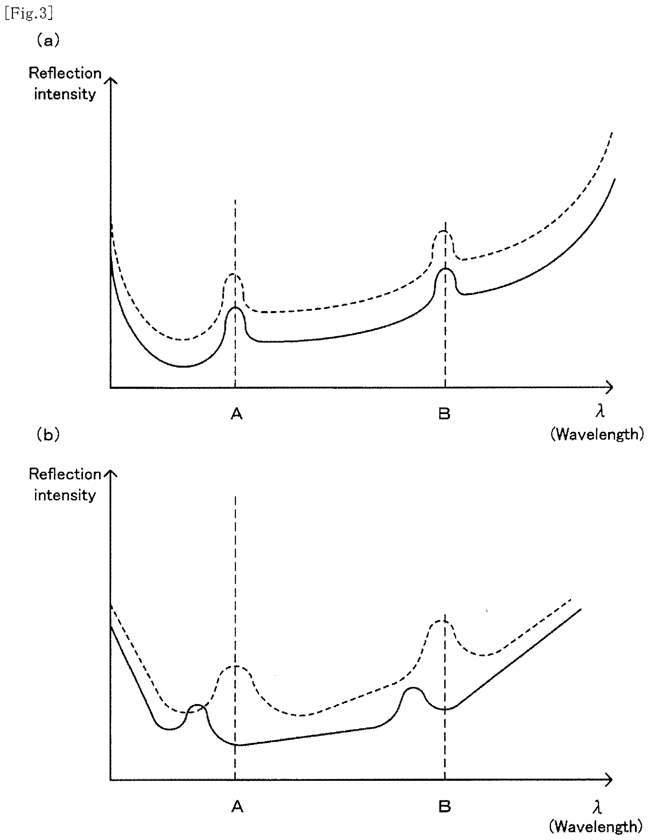

As a result, little difference is seen between both spectral images, as shown in Fig. 3(a).

In contrast, when a problem with the powder layer surface is the cause of the sintering defect, as according to B, the region of the sintering defect is not necessarily continuous, and the uneven condition of the powder layer is irregular.

Consequently, when, after a sintering region with the sintering defect that resulted in commanding in the process c, the sintering defect remains at the sintering region at which the reflection intensity was measured, the irregular uneven condition clearly differs from the uneven condition of the original sintering defect, whereas if the sintering defect has already disappeared at the sintering region where the reflection intensity is subsequently measured, the condition of the reflective beam 7 or reflected light 9 will naturally be clearly different.

Therefore, the spectral image based on the reflection intensity at the subsequent sintering region changes rapidly from the spectral image based on the reflection intensity of the sintering defect that resulted in commanding process c.

As a result, as shown in Fig. 3(b), spectral images are obtained that clearly differ between the former and the latter.

Thus, due to the distinct difference in transition of the reflection state between the case of A and the case of B, the change in the spectral image also differs, and the judging process e can be made.

The judgment according to e can be made visually based on the state of change between the spectral image for the sintering defect that resulted in commanding process c and the spectral image in the subsequent sintering region.

However, a prescribed numerical control is necessary if the judgment is to be automated and displayed.

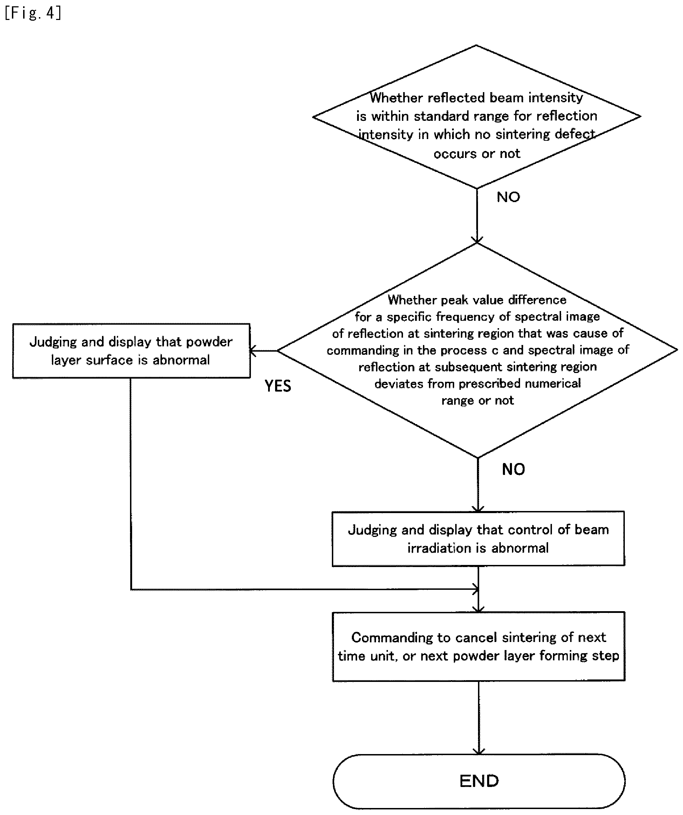

Thus, an embodiment may be adopted as shown in the flow chart of Fig. 4, wherein there are selected among the spectral images of the process d, the sintering region in which the sintering defect that resulted in commanding process c has occurred, and one sintering region among the subsequent sintering regions, and
if the peak value difference for a specific frequency in both spectral images is within a prescribed numerical range previously set as a standard, then it is judged and displayed that the cause of the sintering defect that resulted in commanding process c is a problem with the control system relating to the laser beam or electron beam, as according to A above,
while if the difference deviates from the prescribed numerical range previously set as a standard, then it is judged and displayed that the cause of the sintering defect is a problem with the powder layer surface as according to B above.

The previous setting of the prescribed numerical range as a standard can be accomplished by taking spectral images in advance for each sintering step at multiple positions during each time unit when the problem with the control system relating to the laser beam or electron beam as according to A is at its maximum state, creating the data for the state of peak value change for a specific frequency in advance, and then for the actual judgment, using the numerical value for the peak value ratio or difference between the two sintering regions.

This numerical value will also differ depending on the material of the object to be shaped, the radiation intensity of each beam and the performance of the measuring apparatus that measures the reflective beam 7 or reflected light 9, and it is impossible to specify the numerical range for the standard range in a general manner.

In order to diagnose the cause of the sintering defect, the following process may be adopted according to basic configuration (2) .
f. Recording the reflection intensities at the sintering region where the sintering defect that resulted in commanding in the process c, and at the sintering region within the subsequent time unit,
g. judging that the cause of the sintering defect resulted in commanding in the process c is a problem with the control system related to the laser beam or electron beam, when each reflection intensity in the process f is unchanged or changes only gradually, and
judging that the cause of the sintering defect is a problem with the powder layer-formed surface, when each reflection intensity in the process f changes rapidly.

The following is the reasoning under which a judgment according to the process g can be made by recording the reflection intensity as in the process f.

As explained for the imaging in the process d and the judging process e, when the cause is A, the reflective beam 7 or the reflected light 9 is either unchanged (also including unchanged in approximate terms, or essentially unchanged), or only slightly changed.

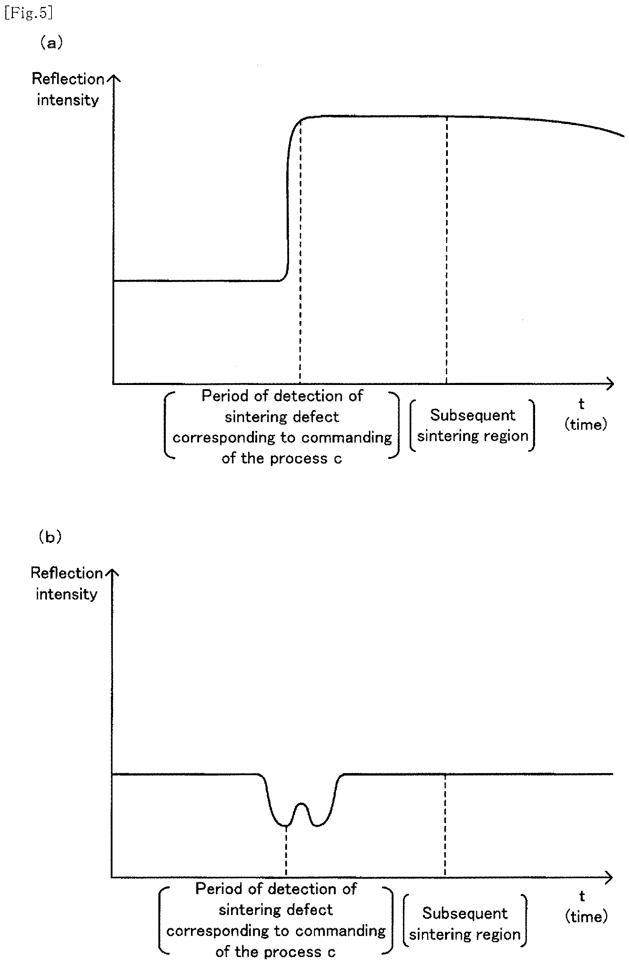

As a result, the reflection intensity also exhibits either no change or only a small change, as shown in Fig. 5(a).

In contrast, when the cause is B, the uneven condition of the powder layer surface changes rapidly, and as a result the reflection intensity at the sintering region that was the cause of commanding in the process c and the reflection intensity at the subsequent sintering region change rapidly as shown in Fig. 5(b).

Thus, the case of A and the case of B can be judged according to the process g based on the clear difference in the transition of the change in reflection intensity.

The judging process g can be made visually based on the state of change between the reflection intensity for the sintering defect that resulted in commanding in the process c and the reflection intensity in the subsequent sintering region.

However, a prescribed numerical control is necessary in order for the judgment to be automated and displayed.

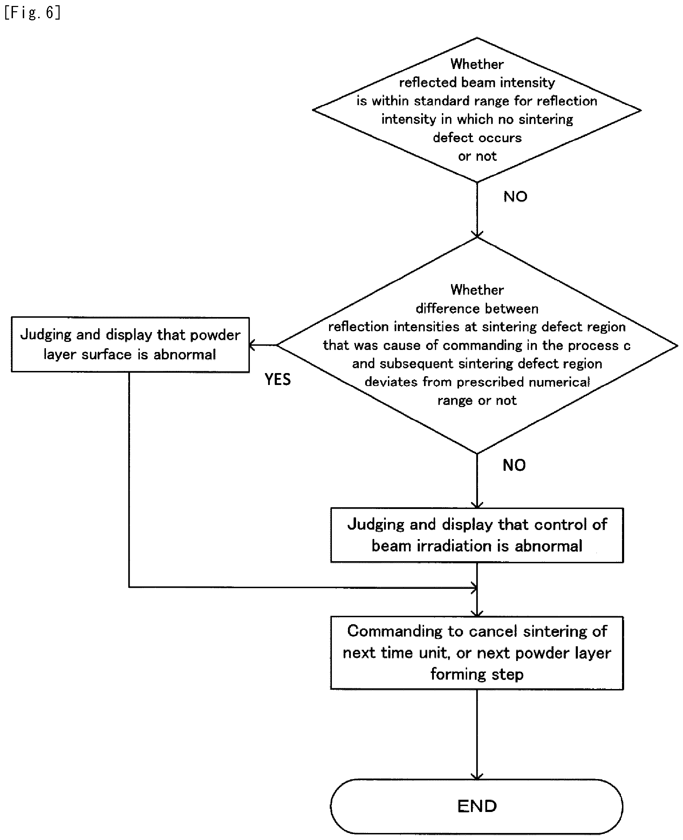

Thus, an embodiment may be adopted as shown in the flow chart of Fig. 6, such that, among the reflection intensities according to the process f, if the difference in the reflection intensities of the sintering region at which a sintering defect occurred resulting in commanding process c and at least one subsequent sintering region is within a prescribed numerical range previously set as a standard, then it is judged and displayed that the cause of the sintering defect that resulted in commanding in the process c is a problem with the control system relating to the laser beam or electron beam,
while if the difference deviates from the prescribed numerical range previously set as a standard, then it is judged and displayed that the cause of the sintering defect is a problem with the powder layer surface.

The previous setting of the prescribed numerical range as a standard can be accomplished by creating the data for the transition of the reflection intensity for the time unit of each sintering step, when the problem with the control system relating to the laser beam or electron beam as according to A is at its maximum state, and then for the actual judgment, using the numerical value standard for the ratio or difference relating to the reflection intensities for the two sintering regions.

This numerical value will also differ depending on the material of the object to be shaped, the radiation intensity of each beam and the performance of the measuring apparatus that measures the reflective beam 7 or reflected light 9, such that it is impossible to specify the numerical range for the standard range in a general manner.

A description will be given as below according to Examples.

### [Example 1]

For Example 1, the entire sintering region including the sintering position in which the cause of a sintering defect has been corrected and commanding in the process c has been carried out, or that entire sintering region and the entire sintering region that has already been laminated below that region, is melted or softened by a laser beam or electron beam, and then only the portion of the thickness of the melted or softened region, or the portion of the thickness of the sintered and laminated sintering region is removed, or alternatively the entireties of each of those sintering regions are removed with a cutting tool, and the laminating step and sintering step are repeated from the freshly removed regions.

As an explanation in terms of the technical gist of Example 1, even though the position of the sintering defect that was the cause of commanding in the process c, and its proximity, has been melted and removed with the laser beam or electron beam, new lamination and sintering in that region requires image analysis of the melted and removed region and new lamination and sintering based on that analysis.

However, it is highly complicated and inefficient to perform such image analysis, and to carry out the powder layer forming step and sintering step in a local region based on the image analysis.

Therefore, in Example 1, the entire sintering region including the position in which the sintering defect has been produced by each beam, or not only that entire sintering region, but also the entire sintering region that has already been formed, are melted, and then based on precise dimensional measurement, the portion of the thickness of the sintering region is removed, or alternatively the portion of the thickness of that entire region and the entire sintering region that has already been formed below it, are removed, then continuously carrying out the new lamination and sintering.

In the case of Example 1, it is possible to effectively utilize the sintered layer that has already been formed, except for the region that is melted and removed in this manner, so that a three-dimensional shaped product without defects can be produced even when a sintering defect has been detected.

### [Example 2]

For Example 2, a light signal and/or an audio signal indicate the presence of a sintering problem during commanding in the process c.

This configuration allows sintering defects to be rapidly dealt with.

Specifically, if different color light signals are selected or different audio signals are selected depending on whether the cause of the sintering defect is A or B, it will be possible to rapidly determine and deal with the cause of the sintering defect.

### [Industrial Applicability]

As explained above, in the present invention, sintering defects may be rapidly detected, and three-dimensional shaped products may be produced efficiently.

On the other hand, in the present invention, production of three-dimensional shaped products with defects may be prevented, and so the invention is useful in all three-dimensional shaping methods.

### [Reference Signs List]

- 1:: Container (vessel)
- 2:: Table
- 3:: Powder supply device
- 4:: Squeegee
- 5:: Laser beam or electron beam supply source
- 6:: Scanner
- 7:: Reflective beam
- 8:: Reflective beam measuring apparatus
- 81:: Reflective beam detector
- 82:: Reflective beam measuring instrument
- 9:: Reflected light
- 10:: Controller
- 11:: Irradiating light source

## Claims

1. A three-dimensional shaping method that includes lamination comprising alternately repeating a powder layer forming step and a sintering step in which the powder layer is sintered by irradiation of a moving laser beam or electron beam, wherein the following process is adopted during the sintering step:
a. measuring the reflection intensity of the laser beam or electron beam irradiated during each sintering step, or irradiation of light other than the laser beam on the whole sintering region, and measuring the reflection intensity of that light, in each sintering step,
b. commanding to continue sintering in the next time unit or the next powder layer forming step, when, in a time unit within the time necessary for each sintering step, it has been detected that the reflection intensity of the process a is within a standard range for reflection intensity in which no sintering defects are produced,
c. commanding to cancel sintering in the next time unit or the next powder layer forming step under a judging that a sintering defect has occurred, when, in a time unit within the time necessary for each sintering step, it has been detected that the reflection intensity of the process a has deviated from the standard range for reflection intensity in which no sintering defects are produced,
the method **characterized by**
d. taking spectral images for the laser beam or electron beam, or reflected light other than the laser beam that has been reflected from the sintering region where the sintering defect has occurred causing commanding in the process c, and from the sintering region within the subsequent time unit, based on the intensity corresponding to each wavelength according to a spectral function,
e. judging that the cause of the sintering defect that resulted in commanding in the process c is a problem with the control system related to the laser beam or electron beam, when each spectral image in the process d is unchanged or changes only gradually, and
judging that the cause of the sintering defect is a problem with the powder layer-formed surface, when each spectral image in the process d changes rapidly.

2. A three-dimensional shaping method according to claim 1, wherein there are selected among the spectral images of the process d, the sintering region in which the sintering defect that resulted in commanding in the process c has occurred, and one sintering region among the subsequent sintering regions, and
if the peak value difference for a specific frequency in both spectral images is within a prescribed numerical range previously set as a standard, then it is judged and displayed that the cause of the sintering defect that resulted in commanding in the process c is a problem with the control system relating to the laser beam or electron beam,
while if the difference deviates from the prescribed numerical range previously set as a standard, then it is judged and displayed that the cause of the sintering defect is a problem with the powder layer surface.

3. A three-dimensional shaping method that includes lamination comprising alternately repeating a powder layer forming step and a sintering step in which the powder layer is sintered by irradiation of a moving laser beam or electron beam, wherein the following process is adopted during the sintering step:
a. measuring the reflection intensity of the laser beam or electron beam irradiated during each sintering step, or irradiation of light other than the laser beam on the whole sintering region, and measuring the reflection intensity of that light, in each sintering step,
b. commanding to continue sintering in the next time unit or the next powder layer forming step, when, in a time unit within the time necessary for each sintering step, it has been detected that the reflection intensity of the process a is within a standard range for reflection intensity in which no sintering defects are produced,
c. commanding to cancel sintering in the next time unit or the next powder layer forming step under a judging that a sintering defect has occurred, when, in a time unit within the time necessary for each sintering step, it has been detected that the reflection intensity of the process a has deviated from the standard range for reflection intensity in which no sintering defects are produced,
the method **characterized by**
f. recording the reflection intensities at the sintering region where the sintering defect has occurred that resulted in commanding in the process c, and at the sintering region within the subsequent time unit,
g. judging that the cause of the sintering defect that resulted in commanding in the process c is a problem with the control system related to the laser beam or electron beam, when each reflection intensity in the process f is unchanged or changes only gradually, and
judging that the cause of the sintering defect is a problem with the powder layer-formed surface, when each reflection intensity in the process f changes rapidly.

4. A three-dimensional shaping method according to claim 3, wherein, among the reflection intensities according to the process f,
if the difference in the reflection intensities of the sintering region at which a sintering defect occurred resulting in commanding in the process c and at least one subsequent sintering region is within a prescribed numerical range previously set as a standard, then it is judged and displayed that the cause of the sintering defect that resulted in commanding in the process c is a problem with the control system relating to the laser beam or electron beam,
while if the difference deviates from the prescribed numerical range previously set as a standard, then it is judged and displayed that the cause of the sintering defect is a problem with the powder layer surface.

5. A three-dimensional shaping method according to any one of claim 1, 2, 3 or 4, wherein the entire sintering region including the sintering position in which the cause of a sintering defect has been corrected and commanding in the process c has been carried out, or that entire sintering region and the entire sintering region that has already been laminated below that region, is melted or softened by a laser beam or electron beam, and then only the portion of the thickness of the melted or softened region, or the portion of the thickness of the sintered and laminated sintering region is removed, or alternatively the entireties of each of those sintering regions are removed with a cutting tool, and the laminating step and sintering step are repeated from the freshly removed regions.

6. A three-dimensional shaping method according to claim 1 or 3, wherein during commanding in the process c, the sintering problem is indicated by a light signal and/or an audio signal.

7. A three-dimensional shaping method according to any one of claims 2, 4 or 6, wherein a light signal of a different color is selected for the cause of the sintering defect.

8. A three-dimensional shaping method according to any one of claims 2, 4 or 6, wherein a different audio signal is selected for the cause of the sintering defect.

## Patentansprüche

1. Dreidimensionales Formungsverfahren, das eine Schichtung umfasst, die ein abwechselndes Wiederholen eines Pulverschichtbildungsschritts und eines Sinterschritts umfasst, bei dem die Pulverschicht durch Einstrahlung eines sich bewegenden Laserstrahls oder Elektronenstrahls gesintert wird, wobei während des Sinterschritts der folgende Prozess angewandt wird,
a. Messen der Reflexionsintensität des während jedes Sinterschritts eingestrahlten Laserstrahls oder Elektronenstrahls, oder Einstrahlung von anderem Licht als dem Laserstrahl auf den ganzen Sinterbereich und Messen der Reflexionsintensität jenes Lichts bei jedem Sinterschritt,
b. Befehlen, das Sintern in der nächsten Zeiteinheit oder den nächsten Pulverschichtbildungsschritt fortzusetzen, wenn in einer Zeiteinheit innerhalb der für jeden Sinterschritt notwendigen Zeit erfasst worden ist, dass die Reflexionsintensität des Prozesses a innerhalb eines Standardbereichs für eine Reflexionsintensität ist, in dem keine Sinterdefekte erzeugt werden,
c. Befehlen, das Sintern in der nächsten Zeiteinheit oder den nächsten Pulverschichtbildungsschritt aufgrund einer Beurteilung abzubrechen, dass ein Sinterdefekt aufgetreten ist, wenn in einer Zeiteinheit innerhalb der für jeden Sinterschritt notwendigen Zeit erfasst worden ist, dass die Reflexionsintensität des Prozesses a von dem Standardbereich für eine Reflexionsintensität, in dem keine Sinterdefekte erzeugt werden, abgewichen ist,
wobei das Verfahren **gekennzeichnet ist durch**
d. Erstellen von Spektralbildern für den Laserstrahl oder Elektronenstrahl, oder für anderes reflektiertes Licht als den Laserstrahl, der bzw. das von dem Sinterbereich reflektiert worden ist, wo der Sinterdefekt aufgetreten ist, was das Befehlen im Prozess c verursacht, und von dem Sinterbereich innerhalb der nachfolgenden Zeiteinheit, basierend auf der Intensität entsprechend jeder Wellenlänge gemäß einer spektralen Funktion,
e. Beurteilen, dass die Ursache des Sinterdefekts, die in dem Befehlen im Prozess c resultierte, ein Problem mit dem zu dem Laserstrahl oder Elektronenstrahl gehörigen Steuersystem ist, wenn jedes Spektralbild im Prozess d unverändert ist oder sich nur allmählich ändert, und
Beurteilen, dass die Ursache des Sinterdefekts ein Problem mit der aus der Pulverschicht gebildeten Oberfläche ist, wenn sich jedes Spektralbild im Prozess d schnell ändert.

2. Dreidimensionales Formungsverfahren nach Anspruch 1, wobei unter den Spektralbildern des Prozesses d der Sinterbereich, in dem der Sinterdefekt aufgetreten ist, der in dem Befehlen im Prozess c resultierte, und ein Sinterbereich unter den nachfolgenden Sinterbereichen ausgewählt werden, und
falls die Scheitelwertdifferenz für eine spezifische Frequenz in beiden Spektralbildern innerhalb eines vorgeschriebenen numerischen Bereichs ist, der zuvor als Standard eingestellt wurde, beurteilt und angezeigt wird, dass die Ursache für den Sinterdefekt, der in dem Befehlen im Prozess c resultierte, ein Problem mit dem zu dem Laserstrahl oder Elektronen gehörigen Steuersystem ist,
während, falls der Unterschied von dem vorgeschriebenen numerischen Bereich abweicht, der zuvor als Standard eingestellt wurde, beurteilt und angezeigt wird, dass die Ursache für den Sinterdefekt ein Problem mit der Pulverschichtoberfläche ist.

3. Dreidimensionales Formungsverfahren, das eine Schichtung umfasst, die ein abwechselndes Wiederholen eines Pulverschichtbildungsschritts und eines Sinterschritts umfasst, bei dem die Pulverschicht durch Einstrahlung eines sich bewegenden Laserstrahls oder Elektronenstrahls gesintert wird, wobei während des Sinterschritts der folgende Prozess angewandt wird,
a. Messen der Reflexionsintensität des während jedes Sinterschritts eingestrahlten Laserstrahls oder Elektronenstrahls, oder Einstrahlung von anderem Licht als dem Laserstrahl auf den ganzen Sinterbereich und Messen der Reflexionsintensität jenes Lichts bei jedem Sinterschritt,
b. Befehlen, das Sintern in der nächsten Zeiteinheit oder den nächsten Pulverschichtbildungsschritt fortzusetzen, wenn in einer Zeiteinheit innerhalb der für jeden Sinterschritt notwendigen Zeit erfasst worden ist, dass die Reflexionsintensität des Prozesses a innerhalb eines Standardbereichs für eine Reflexionsintensität ist, in dem keine Sinterdefekte erzeugt werden,
c. Befehlen, das Sintern in der nächsten Zeiteinheit oder den nächsten Pulverschichtbildungsschritt aufgrund einer Beurteilung abzubrechen, dass ein Sinterdefekt aufgetreten ist, wenn in einer Zeiteinheit innerhalb der für jeden Sinterschritt notwendigen Zeit erfasst worden ist, dass die Reflexionsintensität des Prozesses a von dem Standardbereich für eine Reflexionsintensität, in dem keine Sinterdefekte erzeugt werden, abgewichen ist,
wobei das Verfahren **gekennzeichnet ist durch**
f. Aufzeichnen der Reflexionsintensitäten in dem Sinterbereich, wo der Sinterdefekt aufgetreten ist, der in dem Befehlen im Prozess c resultierte, und in dem Sinterbereich innerhalb der nachfolgenden Zeiteinheit,
g. Beurteilen, dass die Ursache des Sinterdefekts, der in dem Befehlen im Prozess c resultierte, ein Problem mit dem zu dem Laserstrahl oder Elektronenstrahl gehörigen Steuersystem ist, wenn jede Reflexionsintensität im Prozess f unverändert ist oder sich nur allmählich ändert, und
Beurteilen, dass die Ursache des Sinterdefekts ein Problem mit der aus der Pulverschicht gebildeten Oberfläche ist, wenn sich jede Reflexionsintensität im Prozess f schnell ändert.

4. Dreidimensionales Formungsverfahren nach Anspruch 3, wobei unter den Reflexionsintensitäten gemäß dem Prozess f,
falls der Unterschied in den Reflexionsintensitäten des Sinterbereichs, in dem ein Sinterdefekt aufgetreten ist, der in dem Befehlen im Prozess c resultierte, und wenigstens eines nachfolgenden Sinterbereichs innerhalb eines vorgeschriebenen numerischen Bereichs ist, der zuvor als Standard eingestellt wurde, beurteilt und angezeigt wird, dass die Ursache für den Sinterdefekt, der in dem Befehlen im Prozess c resultierte, ein Problem mit dem zu dem Laserstrahl oder Elektronenstrahl gehörigen Steuersystem ist,
während, falls der Unterschied von dem vorgeschriebenen numerischen Bereich abweicht, der zuvor als Standard eingestellt wurde, beurteilt und angezeigt wird, dass die Ursache für den Sinterdefekt ein Problem mit der Pulverschichtoberfläche ist.

5. Dreidimensionales Formungsverfahren nach einem der Ansprüche 1, 2, 3 oder 4, wobei der gesamte Sinterbereich, der die Sinterposition umfasst, in der die Ursache eines Sinterdefekts korrigiert worden ist und das Befehlen im Prozess c ausgeführt worden ist, oder jener gesamte Sinterbereich und der gesamte Sinterbereich, der bereits unter diesem Bereich geschichtet worden ist, durch einen Laserstrahl oder Elektronenstrahl geschmolzen oder weich gemacht werden, und dann nur der Abschnitt der Dicke des geschmolzenen oder weich gemachten Bereichs, oder der Abschnitt der Dicke des gesinterten und geschichteten Sinterbereichs entfernt wird, oder alternativ die Gesamtheiten von jedem jener Sinterbereiche mit einem Schneidwerkzeug entfernt werden, und der Schichtschritt und der Sinterschritt von den neu entfernten Bereichen wiederholt werden.

6. Dreidimensionales Formungsverfahren nach Anspruch 1 oder 3, wobei während des Befehlens im Prozess c das Sinterproblem durch ein Lichtsignal und/oder ein Audiosignal angezeigt wird.

7. Dreidimensionales Formungsverfahren nach einem der Ansprüche 2, 4 oder 6, wobei für die Ursache des Sinterdefekts ein Lichtsignal einer unterschiedlichen Farbe ausgewählt wird.

8. Dreidimensionales Formungsverfahren nach einem der Ansprüche 2, 4 oder 6, wobei für die Ursache des Sinterdefekts ein unterschiedliches Audiosignal ausgewählt wird.

## Revendications

1. Procédé de mise en forme tridimensionnelle qui comporte une stratification comprenant la répétition en alternance d'une étape de formation de couche de poudre et d'une étape de frittage dans laquelle la couche de poudre est frittée par irradiation d'un faisceau laser ou d'un faisceau d'électrons mobile, dans lequel le processus suivant est adopté pendant l'étape de frittage,
a. mesurer l'intensité de réflexion du faisceau laser ou du faisceau d'électrons irradié pendant chaque étape de frittage, ou l'irradiation de lumière autre que le faisceau laser sur la région de frittage dans son ensemble et mesurer l'intensité de réflexion de cette lumière, lors de chaque étape de frittage,
b. commander la poursuite du frittage dans l'unité de temps suivante ou l'étape de formation de couche de poudre suivante, lorsque, dans une unité de temps au sein du temps nécessaire à chaque étape de frittage, il a été détecté que l'intensité de réflexion du processus a se situe dans une plage standard d'intensité de réflexion dans laquelle aucun défaut de frittage n'est produit,
c. commander l'annulation du frittage dans l'unité de temps suivante ou l'étape de formation de couche de poudre suivante en estimant qu'un défaut de frittage est apparu, lorsque, dans une unité de temps au sein du temps nécessaire à chaque étape de frittage, il a été détecté que l'intensité de réflexion du processus a s'est écartée de la plage standard pour l'intensité de réflexion dans laquelle aucun défaut de frittage n'est produit,
le procédé étant **caractérisé par**
d. la prise d'images spectrales pour le faisceau laser ou le faisceau d'électrons, ou la lumière réfléchie autre que le faisceau laser qui a été réfléchi à partir de la région de frittage où le défaut de frittage est apparu, amenant la commande dans le processus c, et à partir de la région de frittage au sein de l'unité de temps consécutive, sur la base de l'intensité correspondant à chaque longueur d'onde selon une fonction spectrale,
e. l'estimation que la cause du défaut de frittage qui a abouti à la commande dans le processus c est un problème avec le système de commande associé au faisceau laser ou au faisceau d'électrons, lorsque chaque image spectrale dans le processus d est inchangée ou ne change que graduellement, et
l'estimation que la cause du défaut de frittage est un problème avec la surface formée par une couche de poudre, lorsque chaque image spectrale dans le processus d change rapidement.

2. Procédé de mise en forme tridimensionnelle selon la revendication 1, dans lequel sont sélectionnées parmi les images spectrales du processus d, la région de frittage dans laquelle le défaut de frittage qui a abouti à la commande dans le processus c est apparu, et une région de frittage parmi les régions de frittage consécutives, et
si la différence de valeurs de crête pour une fréquence spécifique dans les deux images spectrales se situe au sein d'une plage numérique prescrite définie précédemment en tant qu'étalon, alors il est estimé et affiché que la cause du défaut de frittage qui a abouti à la commande dans le processus c est un problème avec le système de commande relatif au faisceau laser ou au faisceau d'électrons,
tandis que si la différence s'écarte la plage numérique prescrite définie précédemment en tant qu'étalon, alors il est estimé et affiché que la cause du défaut de frittage est un problème avec la surface de couche de poudre.

3. Procédé de mise en forme tridimensionnelle qui comporte une stratification comprenant la répétition en alternance d'une étape de formation de couche de poudre et d'une étape de frittage dans laquelle la couche de poudre est frittée par irradiation d'un faisceau laser ou d'un faisceau d'électrons mobile, dans lequel le processus suivant est adopté pendant l'étape de frittage :
a. mesurer l'intensité de réflexion du faisceau laser ou du faisceau d'électrons irradié pendant chaque étape de frittage, ou l'irradiation de lumière autre que le faisceau laser sur la région de frittage dans son ensemble et mesurer l'intensité de réflexion de cette lumière, lors de chaque étape de frittage,
b. commander la poursuite du frittage dans l'unité de temps suivante ou l'étape de formation de couche de poudre suivante, lorsque, dans une unité de temps au sein du temps nécessaire à chaque étape de frittage, il a été détecté que l'intensité de réflexion du processus a se situe dans une plage standard pour l'intensité de réflexion dans laquelle aucun défaut de frittage n'est produit,
c. commander l'annulation du frittage dans l'unité de temps suivante ou l'étape de formation de couche de poudre suivante en estimant qu'un défaut de frittage est apparu, lorsque, dans une unité de temps au sein du temps nécessaire à chaque étape de frittage, il a été détecté que l'intensité de réflexion du processus a s'est écartée de la plage standard pour l'intensité de réflexion dans laquelle aucun défaut de frittage n'est produit,
le procédé étant **caractérisé par**
f. l'enregistrement des intensités de réflexion au niveau de la région de frittage où le défaut de frittage est apparu qui a abouti à la commande dans le processus c, et au niveau de la région de frittage au sein de l'unité de temps consécutive,
g. l'estimation que la cause du défaut de frittage qui a abouti à la commande dans le processus c est un problème avec le système de commande associé au faisceau laser ou au faisceau d'électrons, lorsque chaque intensité de réflexion dans le processus f est inchangée ou ne change que graduellement, et
l'estimation que la cause du défaut de frittage est un problème avec la surface formée par une couche de poudre, lorsque chaque intensité de réflexion dans le processus f change rapidement.

4. Procédé de mise en forme tridimensionnelle selon la revendication 3, dans lequel, parmi les intensités de réflexion selon le processus f,
si la différence dans les intensités de réflexion de la région de frittage au niveau de laquelle un défaut de frittage est apparu aboutissant à la commande dans le processus c et au moins une région de frittage consécutive se situe au sein d'une plage numérique prescrite définie précédemment en tant qu'étalon, alors il est estimé et affiché que la cause du défaut de frittage qui a abouti à la commande dans le processus c est un problème avec le système de commande relatif au faisceau laser ou au faisceau d'électrons,
tandis que si la différence s'écarte de la plage numérique prescrite définie précédemment en tant qu'étalon, alors il est estimé et affiché que la cause du défaut de frittage est un problème avec la surface de couche de poudre.

5. Procédé de mise en forme tridimensionnelle selon l'une quelconque des revendications 1, 2, 3, ou 4, dans lequel la région de frittage tout entière comportant la position de frittage dans laquelle la cause d'un défaut de frittage a été corrigée et la commande dans le processus c a été réalisée, ou que la région de frittage tout entière et la région de frittage tout entière qui a déjà été stratifiée en dessous de cette région, est fondue ou ramollie par un faisceau laser ou un faisceau d'électrons, et ensuite seule la portion de l'épaisseur de la région fondue ou ramollie, ou la portion de l'épaisseur de la région de frittage frittée et stratifiée est éliminée, ou en variante les intégralités de chacune de ces régions de frittage sont éliminées avec un outil de découpe, et l'étape de stratification et l'étape de frittage sont répétées à partir des régions nouvellement éliminées.

6. Procédé de mise en forme tridimensionnelle selon la revendication 1 ou 3, dans lequel pendant la commande dans le processus c le problème de frittage est indiqué par un signal lumineux et/ou un signal audio.

7. Procédé de mise en forme tridimensionnelle selon l'une quelconque des revendications 2, 4 ou 6, dans lequel un signal lumineux d'une couleur différente est sélectionné pour la cause du défaut de frittage.

8. Procédé de mise en forme tridimensionnelle selon l'une quelconque des revendications 2, 4 ou 6, dans lequel un signal audio différent est sélectionné pour la cause du défaut de frittage.
